# EUROPÄISCHE PATENTSCHRIFT

(11) **EP 3 362 698 B1**
(45) Veröffentlichungstag und Bekanntmachung des Hinweises auf die Patenterteilung: **06.11.2019**
(21) Anmeldenummer: 16762727.2
(22) Anmeldetag: 06.09.2016
(51) Int. Cl.: F16D 65/18, F16D 66/02

(54) **SCHEIBENBREMSE, INSBESONDERE FÜR NUTZFAHRZEUGE**
DISK BRAKE, IN PARTICULAR FOR COMMERCIAL VEHICLES
FREIN À DISQUE, NOTAMMENT POUR VÉHICULES UTILITAIRES

(30) Priorität: 12.10.2015 DE 102015013240
(43) Veröffentlichungstag der Anmeldung: 22.08.2018
(73) Patentinhaber: WABCO Europe BVBA, 1170 Brussels (BE)
(72) Erfinder: JUNGMANN, Hans-Christian, 69517 Gorxheimertal (DE); STUMPF, Martin, 68623 Lampertheim (DE)
(74) Vertreter: Copi, Joachim
(86) Internationale Anmeldenummer: PCT/EP2016/001503
(87) Internationale Veröffentlichungsnummer: WO 2017/063726

(56) Entgegenhaltungen:
- DE-A1- 10 260 597
- DE-A1-102012 002 731
- DE-A1-102012 008 573

## Beschreibung

Die Erfindung betrifft eine Scheibenbremse, insbesondere für Nutzfahrzeuge, mit einem Verschleißsensor und einer Nachstelleinrichtung, die ein Nachstellelement in Form einer Druckschraube und/oder einer Druckhülse aufweist, wobei das Nachstellelement eine Ausnehmung aufweist, in die zum Rückstellen der Nachstelleinrichtung eine mit dem Nachstellelement drehgekoppelte Rückstelleinrichtung hineinragt, wie z.B. aus DE 102 60 597 A1 hervorgeht.

Scheibenbremsen der oben genannten Art sind bekannt, beispielsweise aus der DE 43 12 377 A1. Dabei handelt es sich um eine Gleitsattelscheibenbremse. Der Sensor ist dabei innerhalb einer Ausnehmung in dem Sattel angeordnet. Das Ausbilden einer solchen Ausnehmung ist schwierig und kostenintensiv.

Der Erfindung liegt die Aufgabe zugrunde, die Scheibenbremse der eingangs genannten Art derart weiterzubilden, dass der Aufwand verringert und die Kosten gesenkt werden.

Erfindungsgemäß wird die gestellte Aufgabe bei einer Scheibenbremse der eingangs genannten Art dadurch gelöst, dass der Verschleißsensor zumindest teilweise in der Ausnehmung liegt.

Dabei liegt der Erfindung die Erkenntnis zugrunde, dass es besonders einfach, aufwandsarm und kostengünstig ist, den Verschleißsensor (zumindest teilweise) in der ohnehin vorgesehenen Ausnehmung in dem Nachstellelement unterzubringen, die dem Aufnehmen der Rückstelleinrichtung dient.

Die WO 2013/124247 A1 zeigt eine Scheibenbremse, bei der sowohl eine Rückstelleinrichtung als auch ein Verschleißsensor nicht innerhalb eines Nachstellelements, sondern vielmehr daneben liegen.

Das gleiche gilt für die EP 2 598 767 B1. Auch sie zeigt einen Bremsverschleißsensor einer Scheibenbremse, der zwar über ein Antriebselement mit einer Nachstelleinrichtung gekoppelt ist, jedoch nicht innerhalb einer Ausnehmung in dem Nachstellelement liegt.

Die Sensierung des Verschleißes kann erfindungsgemäß auf beliebige Weise erfolgen. Es ist jedoch bevorzugt, dass das Nachstellelement sich beim Nachstellen axial verschiebt und der Verschleißsensor ein Linearsensor ist, der die axiale Lage des Nachstellelements erfasst.

Diese Ausgestaltung ist nicht nur besonders genau, weil keine Umsetzungen von Axialbewegungen in Drehbewegungen (oder umgekehrt) erforderlich sind. Es ist auch durch die Erfassung der Axialverschiebung des Nachstellelements möglich, mittels des Verschleißsensors nicht nur den Verschleiß, sondern auch den Bremshub zu ermitteln.

Nach einer besonders bevorzugten Ausführungsform handelt es sich bei dem Verschleißsensor um einen Sensor, der eine Hall-Sonde aufweist. Dies ist eine besonders einfache Realisierung eines Sensors für die Ermittlung einer Axialverschiebung.

Erfindungsgemäß weiter bevorzugt ist ein Rückstellansatz vorgesehen, der über ein Getriebe mit der Rückstelleinrichtung drehgekoppelt ist. Diese Ausgestaltung erlaubt es, den Ort, an dem die Bremse zurückgestellt wird, d.h. denjenigen Ort, an dem beispielsweise ein Rockstellwerkzeug angesetzt wird, aus dem Bereich hinter der Nachstelleinrichtung bzw. dem Nachstellelement weg zu verlegen, weil dort erfahrungsgemäß wenig Platz ist.

Dabei kann erfindungsgemäß vorgesehen sein, dass der Rückstellansatz zum Ansetzen eines Rückstellwerkzeugs ausgelegt ist. Bei dieser Ausgestaltung kann das Rückstellwerkzeug (beispielsweise ein Schraubenschlüssel) in einem Bereich angesetzt werden, in dem genügend Platz ist, um die Rückstellung ungestört vorzunehmen.

Nach einer besonders bevorzugten Ausführungsform der Erfindung ist eine Halleeinrichtung vorgesehen, die den Verschleißsensor hält und die sich in die Ausnehmung hineinerstreckt.

Mit anderen Worten wird nicht nur der Verschleißsensor, sondern auch seine Halteeinrichtung (zumindest teilweise) in die Ausnehmung des Nachstellelements hineingelegt. Dadurch wird Platz gespart.

Die Halteeinrichtung ist dabei erfindungsgemäß weiter bevorzugt in dem Bremssattel gelagert. Eine solche Lagerung ist ohne großen Aufwand realisierbar und muss auch nicht übermäßigen Anforderungen an die Genauigkeit genügen, im Gegensatz beispielsweise zu der Lagerung beweglicher Teile.

Weiter bevorzugt ist nicht nur der Verschleißsensor, sondern auch die Rückstelleinrichtung von der Halteeinrichtung gehalten. Dadurch kann eine Lagerung der Rückstelleinrichtung in dem Sattel und damit der Aufwand für die Ausbildung einer solchen Lagerung eingespart werden. Solch eine Lagerung ist nämlich mit Bearbeitungen des Bremssattels verbunden. Diese können unterbleiben.

Schließlich ist es erfindungsgemäß besonders bevorzugt vorgesehen, dass die Halteeinrichtung, der Verschleißsensor, die Rückstelleinrichtung, das Getriebe und der Rücksteilansatz eine Baueinheit bilden. Dadurch können die genannten Elemente und Baugruppen, nämlich die Halteeinrichtung, der Verschleißsensor, die Rückstelleinrichtung, das Getriebe und der Rückstellansatz in einem einzigen Arbeitsgang montiert werden, was den Arbeitsaufwand erheblich verringert. Sofern die Rückstellung unmittelbar an der Rückstelleinrichtung erfolgen kann, kann die Baueinheit auch ohne das Getriebe und den Rückstellansatz gebildet sein.

Im Folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: schematisch eine geschnittene Draufsicht auf ein Ausführungsbeispiel der erfindungsgemäßen Scheibenbremse,
- Figur 2: die Scheibenbremse nach Figur 1, jedoch in geschnittener Seitenansicht,

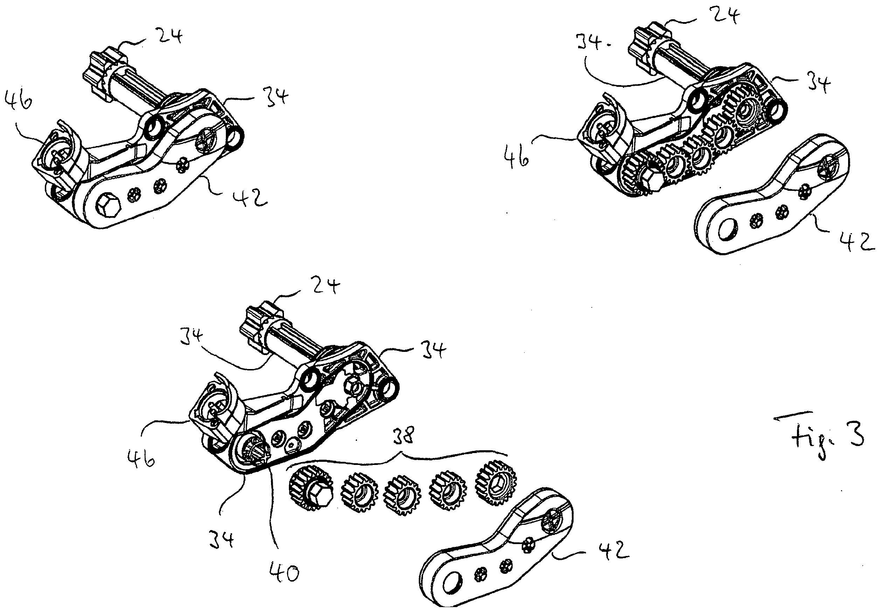

- Figur 3: eine Baueinheit der Scheibenbremse nach den Figuren 1 und 2 in schematisch perspektivischen Ansichten, teilweise in Explosionsdarstellung,

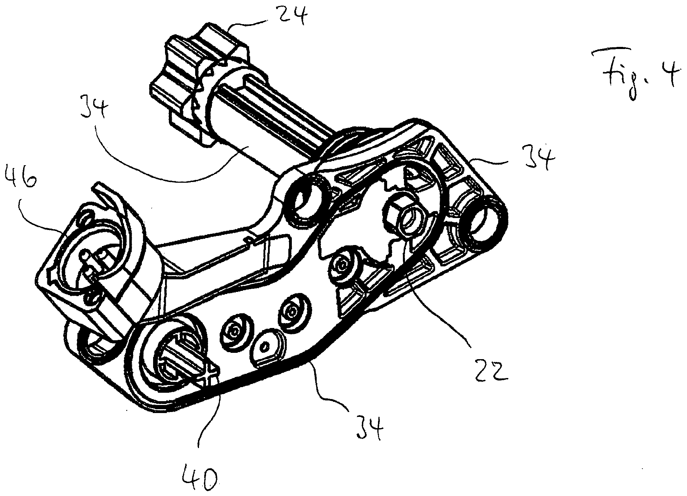

- Figur 4: eine vergrößerte Teilansicht aus Figur 3 und
- Figur 5: schematische Ansichten von Teilen der Baueinheit nach Figur 3, teilweise geschnitten.

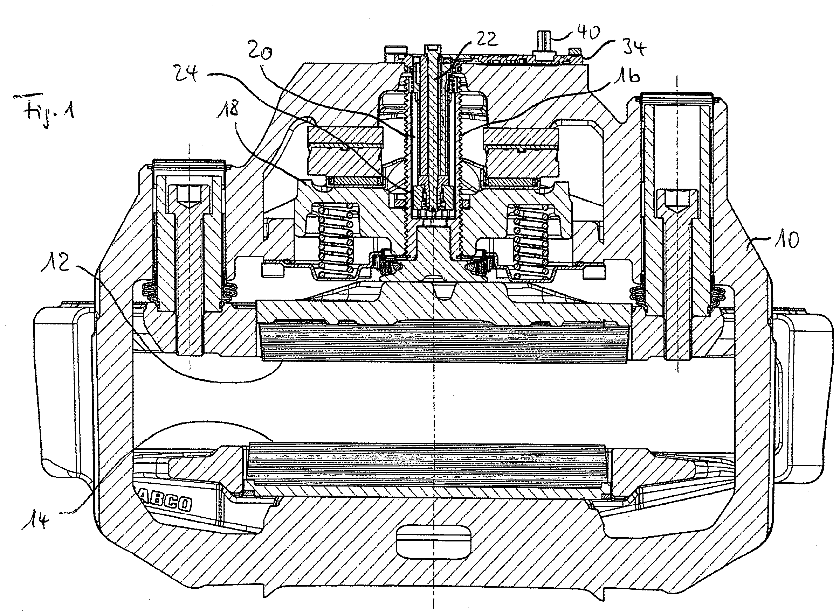

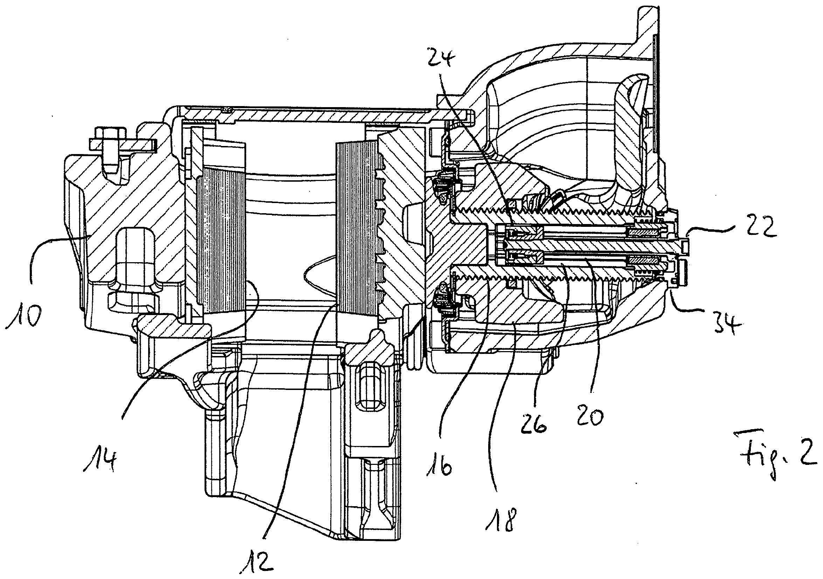

Zu der in der Zeichnung dargestellten Scheibenbremse gehört ein Gleitsattel 10, weil es sich um eine Gleitsattel-Scheibenbremse handelt. Mit zunehmendem Verschleiß von Bremsbelägen 12, 14 wandert der Gleitsattel 10 in Figur 1 nach oben bzw. in Figur 2 nach rechts. Eine Nachstelleinrichtung sorgt dafür, dass dennoch ein vorgegebenes Lüftspiel zwischen den Bremsbelägen 12, 14 und einer nicht in der Zeichnung dargestellten Bremsscheibe erhalten bleibt. Zu dieser Nachstelleinrichtung gehört eine Druckschraube 16, die mit einer Druckhülse 18 verschraubt ist und die zum Nachstellen der Bremse verdreht wird.

Die Druckschraube 16 weist eine Ausnehmung 20 auf, in die eine Rückstelleinrichtung 22 in Form einer Rückstellwelle hineinragt. Die Rückstelleinrichtung 22 trägt an ihrem Arbeitsende einen Mehrkantkopf 24, der sie mit der Druckschraube 16 drehkoppelt, weil die Ausnehmung 20 der Mehrkantkontur des Mehrkantkopfes 24 entsprechende Längsstege 26 aufweist. Durch Verdrehen der Rückstelleinrichtung 22 kann die Druckschraube 16 zurückgestellt werden, beispielsweise für einen Belagwechsel.

In die Ausnehmung 20 hinein erstreckt sich ein Verschleißsensor, zu dem Magnete 28, 30 und eine Hall-Sonde 32 gehören. Die Rückstelleinrichtung 22, die Magnete 28, 30 und die Hall-Sonde 32 sind von einer Halteeinrichtung 34 gehalten, die sich in die Ausnehmung 20 der Druckschraube 16 hineinerstreckt. An der Halteeinrichtung 34 ist darüber hinaus auch eine Schraubenfeder 36 gehalten, die dafür sorgt, dass die Magnete 28, 30 in Axialrichtung mit der Druckschraube 16 gekoppelt sind, so dass sie sich mit der Druckschraube 16 axial bewegen, wohingegen die Hall-Sonde 32 nicht mit der Druckschraube 16 axial gekoppelt ist. Dadurch ist es möglich, durch Sensierung der Axialverschiebungen der Magnete 28, 30 bezüglich der Hall-Sonde 32 auf Axialbewegungen der Druckschraube 16 zu schließen. Dadurch kann nicht nur der Verschleiß der Bremsbeläge 12, 14 ermittelt werden, sondern auch der Hub der Bremse.

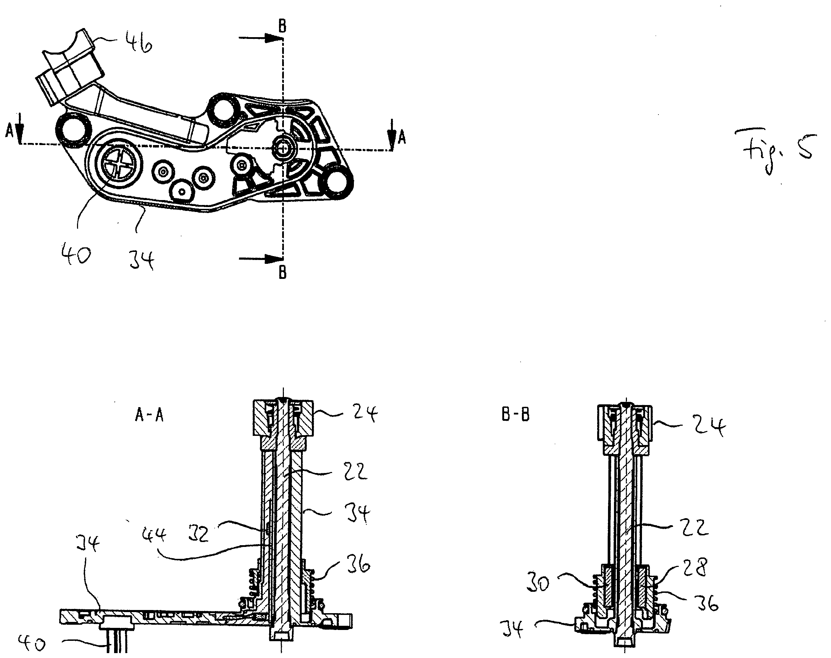

Die Halteeinrichtung 34 ist beispielsweise in der Ansicht nach dem Schnitt A-A in Figur 5 L-förmig. Dabei trägt ein Schenkel des "L" ein Getriebe, das bei dem in der Zeichnung dargestellten Ausführungsbeispiel als Zahngetriebe ausgeführt ist und mit der Bezugszahl 38 bezeichnet ist Dieses Getriebe 38 verbindet einen Rückstellansatz 40 mit der Rückstelleinrichtung 22, so dass die Rückstellung der Bremse, beispielsweise für einen Belagwechsel, nicht durch unmittelbares Ansetzen an der Rückstelleinrichtung 22 erfolgen muss, sondern vielmehr durch Verdrehen des Rückstellansatzes 40 erfolgen kann. Dieser Rückstellansatz liegt außerhalb der Bremsachse und nicht in der Flucht der Druckschraube 16 und damit in einem Bereich, in dem mehr Platz ist, um ein Rückstellwerkzeug, wie etwa einen Schraubenschlüssel, an dem Rückstellansatz 40 anzusetzen.

Zu der Halteeinrichtung 34 gehört ein Deckel 42, der insbesondere zum Abdecken des Getriebes 38 dient. Mithin ist die Halteeinrichtung 34 in dem in der Zeichnung dargestellten Ausführungsbeispiel als Gehäuse ausgeführt.

Die Half-Sonde 32 liegt auf einer Platine 44, die über eine nicht in der Zeichnung dargestellte Verkabelung mit einem elektrischen Anschluss 46 an der Halteeinrichtung 34 verbunden ist. Über diesen elektrischen Anschluss werden die Ausgangssignale der Hall-Sonde 32 an eine Auswerteinrichtung geleitet.

Die Halteeinrichtung 34 ist in dem Gleitsattel 10 gelagert. Sie hält bzw. trägt die Rückstelleinrichtung 22, die Magnete 28, 30, die Hall-Sonde 32 und damit die wesentlichen Teile des Verschleißsensors, das Getriebe 38 und den Rückstellansatz 40, weshalb für alle diese genannten Bauelemente keine Lagerungen in dem Gleitsattel 10 erforderlich sind. Vielmehr wird durch die Lagerung der Halteeinrichtung 34 in dem Gleitsattel 10 die gesamte Baueinheit gelagert, ohne dass aufwendige Arbeiten an dem Gleitsattel 10 erforderlich sind.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

### BEZUGSZEICHENLISTE

- 10: Gleitsattel
- 12: Bremsbelag
- 14: Bremsbelag
- 16: Druckschraube
- 18: Druckhülse
- 20: Ausnehmung
- 22: Rückstelleinrichtung
- 24: Mehrkantkopf
- 26: Längssteg
- 28: Magnet
- 30: Magnet
- 32: Hall-Sonde
- 34: Halteeinrichtung
- 36: Schraubenfeder
- 38: Getriebe
- 40: Rückstellansatz
- 42: Deckel
- 44: Platine
- 46: elektrischer Anschluß

## Patentansprüche

1. Scheibenbremse, insbesondere für Nutzfahrzeuge, mit
einem Verschleißsensor (28, 30, 32) und
einer Nachstelleinrichtung, die ein Nachstellelement in Form einer Druckschraube (16) und/oder einer Druckhülse (18) aufweist, wobei
das Nachstellelement eine Ausnehmung (20) aufweist, in die zum Rückstellen der Nachstelleinrichtung eine mit dem Nachstellelement drehgekoppelte Rückstelleinrichtung (22) hineinragt.
**dadurch gekennzeichnet, dass**
der Verschleißsensor (28, 30, 32) zumindest teilweise in der Ausnehmung (20) liegt.

2. Scheibenbremse nach Anspruch 1, **dadurch gekennzeichnet, dass** das Nachstellelement sich beim Nachstellen axial verschiebt und der Verschleißsensor (28, 30, 32) ein Linearsensor ist, der die axiale Lage des Nachstellelements erfasst.

3. Scheibenbremse nach Anspruch 1 oder 2, **dadurch gekennzeichnet, dass** der Verschleißsensor (28, 30, 32) eine Hall-Sonde (32) aufweist.

4. Scheibenbremse nach einem der vorangehenden Ansprüche, **gekennzeichnet durch** einen Rückstellansatz (40), der über ein Getriebe (38) mit der Rückstelleinrichtung (22) drehgekoppelt ist.

5. Scheibenbremse nach Anspruch 4, **dadurch gekennzeichnet, dass** der Rückstellansatz (40) zum Ansetzen eines Rückstellwerkzeugs ausgelegt ist.

6. Scheibenbremse nach einem der vorangehenden Ansprüche, **gekennzeichnet durch** eine Halteeinrichtung (34), die den Verschleißsensor (28, 30, 32) hält und die sich in die Ausnehmung (20) hineinerstreckt.

7. Scheibenbremse nach Anspruch 6, **gekennzeichnet durch** einen Bremssattel (10), wobei die Halteeinrichtung (34) in dem Bremssattel gelagert ist.

8. Scheibenbremse nach Anspruch 6 oder 7, **dadurch gekennzeichnet, dass** die Rückstelleinrichtung (22) von der Halteeinrichtung (34) gehalten ist.

9. Scheibenbremse nach einem der Ansprüche 6 bis 8, **dadurch gekennzeichnet, dass** die Halteeinrichtung (34), der Verschleißsensor (28, 30, 32), die Rückstelleinrichtung (22), das Getriebe (38) und der Rückstellansatz (40) eine Baueinheit bilden.

## Claims

1. Disk brake, in particular for commercial vehicles, with
a wear sensor (28, 30, 32) and
an adjusting device which has an adjusting element in the form of a pressure screw (16) and/or a pressure sleeve (18), wherein
the adjusting element has a recess (20) into which a reset device (22) extends which is rotationally coupled to the adjusting element for resetting the adjusting device,
**characterized in that**
the wear sensor (28, 30, 32) lies at least partially in the recess (20).

2. Disc brake according to Claim 1, **characterized in that** the adjusting element moves axially on adjustment, and the wear sensor (28, 30, 32) is a linear sensor which detects the axial position of the adjusting element.

3. Disc brake according to Claim 1 or 2, **characterized in that** the wear sensor (28, 30, 32) has a Hall effect sensor (32).

4. Disc brake according to any of the preceding claims, **characterized by** a reset shoulder (40) which is rotationally coupled to the reset device (22) via a gear mechanism (38).

5. Disc brake according to Claim 4, **characterized in that** the reset shoulder (40) is designed for application of a reset tool.

6. Disc brake according to any of the preceding claims, **characterized by** a holding device (34) which holds the wear sensor (28, 30, 32) and extends into the recess (20).

7. Disc brake according to Claim 6, **characterized by** a brake caliper (10), wherein the holding device (34) is mounted in the brake caliper.

8. Disc brake according to Claim 6 or 7, **characterized in that** the reset device (22) is held by the holding device (34).

9. Disc brake according to any of Claims 6 to 8, **characterized in that** the holding device (34), the wear sensor (28, 30, 32), the reset device (22), the gear mechanism (38) and the reset shoulder (40) form one structural unit.

## Revendications

1. Frein à disque, notamment pour véhicules utilitaires, comprenant
un capteur d'usure (28, 30, 32) et
un dispositif de rattrapage de jeu qui possède un élément de rattrapage de jeu sous la forme d'une vis de pressage (16) et/ou d'une douille de pressage (18), l'élément de rattrapage de jeu possédant une cavité (20) dans laquelle fait saillie un dispositif de rappel (22) couplé en rotation avec l'élément de rattrapage de jeu et destiné au rappel du dispositif de rattrapage de jeu,
**caractérisé en ce que**
le capteur d'usure (28, 30, 32) se trouve au moins partiellement dans la cavité (20).

2. Frein à disque selon la revendication 1, **caractérisé en ce que** l'élément de rattrapage de jeu se décale dans le sens axial lors du rattrapage de jeu et le capteur d'usure (28, 30, 32) est un capteur linéaire qui détecte la position axiale de l'élément de rattrapage de jeu.

3. Frein à disque selon la revendication 1 ou 2, **caractérisé en ce que** le capteur d'usure (28, 30, 32) possède une sonde à effet Hall (32).

4. Frein à disque selon l'une des revendications précédentes, **caractérisé par** un talon de rappel (40) qui est couplé en rotation avec le dispositif de rappel (22) par le biais d'un engrenage (38).

5. Frein à disque selon la revendication 4, **caractérisé en ce que** le talon de rappel (40) est conçu pour l'application d'un outil de rappel.

6. Frein à disque selon l'une des revendications précédentes, **caractérisé par** un dispositif de maintien (34) qui maintient le capteur d'usure (28, 30, 32) et qui s'étend à l'intérieur de la cavité (20).

7. Frein à disque selon la revendication 6, **caractérisé par** un étrier de frein (10), le dispositif de maintien (34) étant logé dans l'étrier de frein.

8. Frein à disque selon la revendication 6 ou 7, **caractérisé en ce que** le dispositif de rappel (22) est maintenu par le dispositif de maintien (34).

9. Frein à disque selon l'une des revendications 6 à 8, **caractérisé en ce que** le dispositif de maintien (34), le capteur d'usure (28, 30, 32), le dispositif de rappel (22), l'engrenage (38) et le talon de rappel (40) forment une unité modulaire.
